# EUROPEAN PATENT APPLICATION

(11) **EP 1 103 740 A2**
(43) Date of publication of application: **30.05.2001**
(21) Application number: 00307653.6
(22) Date of filing: 05.09.2000
(51) Int. Cl.: F16G 13/00

(54) **A chain**

(30) Priority: 19.11.1999 GB 9927257
(71) Applicant: RENOLD Plc, Wythenshawe, Manchester M33 5WL (GB)
(72) Inventor: Hilton, Kevin Huw, Newbrough, Hexam NE47 5AN (GB)
(74) Representative: Every, David Aidan

(57) **Abstract**

A chain for transmission or transportation comprises a plurality of chain links (1) interconnected by at least one connection member (2) such that the links (1) articulate relative to one another. The links (1) each have a cover plate (6) with two opposed slots (8) that combine to form a closed elongate slot (10) when the links (1) are articulated to a predetermined nested position. The connection member (2) may be inserted or removed through the slot (10) during assembly or disassembly of the chain. The cover plate (6) is configured to block removal of a connection member (2) from the link when adjacent links are not in said predetermined nested position.

## Description

The present invention relates to a transmission or transportation chain.

A conventional roller and bush chain assembly for transmission or transportation purposes has pairs of opposed inner link plates that are interconnected by pairs of opposed outer link plates and pins about which the inner link plates articulate. Each pin is fixed at its ends to a respective outer link plate but is pivotal relative to the inner link plates within a bush that extends between opposed apertures in the inner link plates.

There is a consistent requirement in the chain manufacturing industry to produce such chains at low cost and with low maintenance or repair requirements. This has resulted in a move towards the manufacture of at least some chain components from plastics or polymer-based materials that have better wear-resistant properties.

It is an object of the present invention to provide for a chain that can be produced and assembled at relatively low cost whilst still retaining adequate chain performance.

According to the present invention there is provided a chain comprising a plurality of chain links interconnected by at least one connection member such that the links articulate relative to one another, characterised in that the links have a cover member with a recess and in that adjacent links are articulatable relative to one another to a predetermined position in which the recesses of adjacent cover members are aligned and combine to form an aperture through which a connection member may be inserted or removed. the cover member being configured to block removal of a connection member from the link when adjacent links are not in said predetermined position.

The invention allows for a chain design that is extremely easy to assemble and disassemble. The cover plate prevents inadvertent removal of the connection member during use of the chain and allows the member to be a loose rotational fit with the link. Since the connection member is not a friction fit with the link the forces required during chain assembly are not significant and therefore it can be performed by automated pick-and-place technology. The design lends itself particularly well to manufacture of the links from a polymer material, although other materials are not excluded from the scope of protection.

The links may comprise link plates interconnected by spaced parallel transverse cylindrical portions, the links having bores that pass through the plates and the cylindrical portions. Limbs of the connection member, which is preferably U-shaped, may be designed to be received rotatably in the bores.

Preferably the cover member recesses are elongate slots which, when aligned in said predetermined position form the aperture which is of a length substantially equal to the length of the connecting member that extends between adjacent links.

Each cover member preferably has two spaced recesses extending in opposed directions from opposed edges of each cover member.

The cover member and the link plate may be connected by an integral transverse web and a clearance may be defined between the cover member and link plate on each side of web to accommodate relative movement of connection member.

A specific embodiment of the present invention will now be described, by way of example only, with reference to the accompanying drawings in which:
Figure 1 is a part exploded perspective view of two links of a chain of the present invention in a nested configuration; and
Figure 2 is a perspective view of the chain of figure 1 in the assembled condition.

Referring now to the drawings, the exemplary chain comprises injection-moulded plastics or polymer links 1 articulately interconnected by U-shaped connection staples 2, the limbs of each staple 2 being rotatably received in bores through adjacent links 1.

Each link 1 is manufactured from an injection-moulded polymer or plastics material and comprises opposed pairs of link plates 3 that are each integrally connected by two spaced transverse cylindrical portions 4. Each link 1 has two spaced bores 5 that pass through the plates 3 and coaxially through the cylindrical portions 4. A cover plate 6 is integrally connected to the outwardly facing surface of each link plate 3 by a single, central, transverse web 7. The cover plate 6 has a shape that is substantially congruous with that of the link plate 3 except that it is thinner, has two spaced elongate recesses 8 extending from opposed edges of the plate 3 and is spaced from the link plate 3 so as to define a longitudinally extending slot 9 on each side of the web 7.

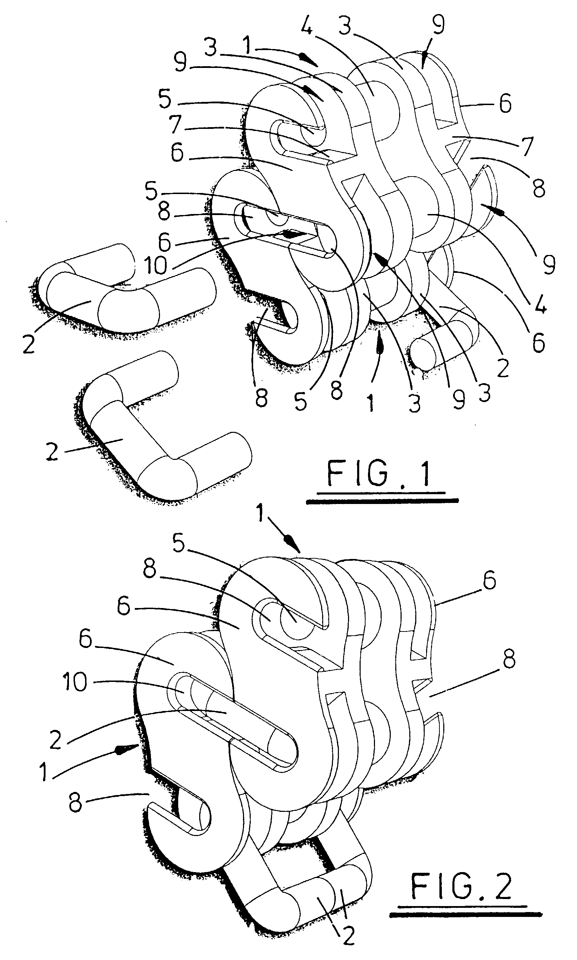

In the configuration shown in the figures the chain links 1 are nested so that adjacent recesses 8 on adjacent links 1 are brought into register and combine to form a closed elongate aperture 10 that is designed to allow the U-shaped connection staple 2 to pass therethrough. In order to assemble the chain, adjacent links 1 are interconnected by moving them to the nested configuration shown and presenting a staple 2 to the elongate aperture 10 in the cover plate 6 on each side as shown in figure 1. The staple 2 is moved laterally of the link 1 so that it passes through the aperture 10 until its limbs are received fully in the bores 5. The links 1 are then articulated out of the position shown so that the cover plate 6 blocks movement of the staple 2 out of engagement with the bores 5. The longitudinal slots 9 provide sufficient clearance to allow for the relative rotational movement of the staples 2 and links 1 during articulation. If it is required to disconnect adjacent chain links 1 it is only possible by moving the links 1 to the nested configuration shown so that the recesses 8 combine to allow passage of the staples 2 through the elongate aperture 10. In general use during transmission or transportation applications, the links 1 of the chain are disposed in an approximate end-to-end relationship so as to form a linearly extending chain, the links of which arc able to articulate so that the chain may bend around, for example, a drive sprocket.

The design allows for simple assembly and disconnection of the chain and eliminates the risk of the connecting staples 2 becoming inadvertently separated from the links 1 during use. Since the connecting staples 2 are not required to be a friction fit with the links 1 the design lends itself well to assembly by automated pick-and-place robotic technology.

It will be appreciated that numerous modifications to the above described design may be made without departing from the scope of the invention as defined in the appended claims. For example, the particular size and shape of the recesses can vary according to the particular form of connecting staple used.

## Claims

1. A chain comprising a plurality of chain links interconnected by at least one connection member such that the links articulate relative to one another, characterised in that the links have a cover member with a recess and in that adjacent links are articulatable relative to one another to a predetermined position in which the recesses of adjacent cover members are aligned and combine to form an aperture through which a connection member may be inserted or removed, the cover member being configured to block removal of a connection member from the link when adjacent links are not in said predetermined position.

2. A chain according to claim 1, wherein ends of the connection member are received rotatably in bores in the links.

3. A chain according to claim 1 or 2, wherein the links comprise link plates interconnected by spaced parallel transverse cylindrical portions.

4. A chain according to claim 3, wherein the links have bores defined through the link plates and the cylindrical portions.

5. A chain according to any one of claims 3 or 4, wherein the connection member is U-shaped.

6. A chain according to claim any one of claims 3 to 5, wherein the link plate is connected to the cover plate by an integral transverse web.

7. A chain according to claim 6, wherein a clearance is defined between the cover member and link plate on each side of web to accommodate relative movement of the connection member.

8. A chain according to any preceding claim, wherein the recesses are elongate slots which, when aligned in said predetermined position, combine to form said aperture that is of a length substantially equal to the length of the connecting member extending between adjacent links.

9. A chain according to any preceding claim, wherein each cover member has two spaced recesses extending in opposed directions from opposed edges of the cover member.

10. A chain substantially as hereinbefore described with reference to the accompanying drawings.
